**Europäisches Patentamt**

**European Patent Office**

**Office européen des brevets**

(19)

(11) Veröffentlichungsnummer: **0 255 519**
**B1**

(12)

# EUROPÄISCHE PATENTSCHRIFT

(45) Veröffentlichungstag der Patentschrift:
08.03.89

(21) Anmeldenummer: 86902365.5

(22) Anmeldetag: 12.03.86

(86) Internationale Anmeldenummer:
PCT/EP 86/00134

(87) Internationale Veröffentlichungsnummer:
WO 86/05449 (25.09.86 Gazette 86/21)

(51) Int. Cl.⁴: **B 60 K 41/06**

(54) STEUEREINRICHTUNG ZUM SCHALTEN VON STUFENWECHSELGETRIEBEN.

(30) Priorität: 23.03.85 PCT/EP85/00124

(43) Veröffentlichungstag der Anmeldung:
10.02.88 Patentblatt 88/6

(45) Bekanntmachung des Hinweises auf die Patenterteilung:
08.03.89 Patentblatt 89/10

(84) Benannte Vertragsstaaten:
DE GB SE

(56) Entgegenhaltungen:
EP-A-0 120 189
EP-A-0 121 168
DE-A-3 247 658
DE-A-3 337 930
GB-A-1 266 654
GB-A-2 042 658
GB-A-2 097 073
US-A-3 628 642
US-A-4 425 620

Broschüre ZF-Automat-Getriebe HP 500, F 1/12 ZFF
792006

(73) Patentinhaber: **ZAHNRADFABRIK**
**FRIEDRICHSHAFEN AKTIENGESELLSCHAFT,**
**Löwentaler Strasse 100 Postfach 2520, D-7990**
**Friedrichshafen 1 (DE)**

(72) Erfinder: **BIEBER, Gerold, Mühlengärten 7, D-7994**
**Langenargen (DE)**

(74) Vertreter: **Raue, Reimund, Zahnradfabrik**
**Friedrichshafen AG Löwentaler Strasse 100**
**Postfach 2520, D-7990 Friedrichshafen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Steuereinrichtung zum Schalten von Stufenwechselgetrieben nach dem Oberbegriff von Anspruch 1.

Bekannte, selbsttätig schaltende Stufenwechselgetriebe für Kraftfahrzeuge werden in Abhängigkeit von Drehzahlen, vorrangig der der Fahrgeschwindigkeit proportionalen Abtriebsdrehzahl des Getriebes, und von Lastzuständen, z. B. Stellung des Gaspedals, im Leerlauf, in Teillast oder Vollast (Kick-down), selbstätig im Bereich der zur Verfügung stehenden Gänge geschaltet. Es ist auch schon bekannt, daß durch den Fahrer über einen Wählschalter Gänge von dieser Schaltfolge ausgeschlossen werden können, z. B. bei Bergabfahrt. Solche Wählschalter haben neben den Stellungen für die normale Vorwärtsfahrt D, die Neutralstellung N und die Rückwärtsfahrt R z. B. noch die Stellung I, II und III, wobei die automatischen Schaltungen des Getriebes dann analog dazu auf den 1. Gang oder eben auf die Gänge 2 und 3 begrenzt sind, siehe Broschüre ZF-Automat-Getriebe HP 500, Beschreibung, Bedienung und Wartung, F 1/12 ZFF 792 006.

Dieses System hat sich bewährt und gibt dem Fahrer ausreichende Eingriffsmöglichkeiten bei selbsttätig schaltenden Stufenwechselgetrieben mit relativ wenig Gängen.

Bei Vielgang-Automatgetrieben, z. B. nach der DE-A-3 247 658 oder DE-A-3 337 930, ist auch schon bekannt, nicht nur höhere, sondern auch tiefere Gänge durch eine entsprechende Verstellung von zwei Wählhebeln vom automatischen Schalten auszuschließen, z. B. bei Leerfahrten und Fahrten mit Teilbeladung.

Weiter ist noch aus der EP-0 121 168 AI bekannt, durch einen Vorwählschalter auch bei einem selbsttätig schaltenden Stufenwechselgetriebe die Schaltpunkte entsprechend einer ökonomischen oder leistungsbezogenen Fahrweise zu verändern.

Weiter ist in einem Getriebe nach der nich vorveröffentlichten Anmeldung PCT-EP 84/00302 vorgesehen, nicht nur Gänge am Anfang und am Ende der zur Verfügung stehenden Gangfolge, z. B. eines Vielgang-Getriebes, von der automatischen Schaltung auszuschließen, sondern in Abhängigkeit von der Ist-Beschleunigung eine Gangfolge nach vorher festgelegten Schaltmodi auszuwählen, die über den gesamten Übersetzungsbereich sich erstrecken, aber nicht alle möglichen Gänge in Anspruch nehmen. So wird z. B. in eir em 16-Gang-Getriebe durch Überspringen von Gängen der Übersetzungsbereich mit weniger Gängen abgedeckt, wobei die ausgewählten Gänge in vorher festgelegten und gespeicherten Schaltmodi gleichmäßigen aber auch ungleichmäßige Abstände voneinander oder auch eine Kombination davon haben können. Damit ist es möglich, bei Ausnutzung der Gesamtübersetzung, je nach Bedingungen im Antriebsstrang, mit weniger Gängen auszukommen und die Anzahl der Schaltungen zu verringern.

Alle diese Einrichtungen befriedigen nicht, insbesondere bei einer Steuereinrichtung zum Schalten von vielgängigen Stufenwechselgetrieben, mit denen eine hohe Anpassung des Antriebstranges an den Motor und besonders an das verbrauchsgünstige Kennfeld des Motors erzielt werden soll. Hierbei wird das maximale Drehmoment des Motors vielfach ausgenutzt, so daß eine ausreichende Reserve zum Beschleunigen nur durch rechtzeitiges, sinnvolles Schalten zu erreichen ist. Bei den bisher üblichen Automatgetrieben mit relativ wenigen Gängen ist die Verweildauer je Gang entsprechend groß und deshalb die Schalthäufigkeit unproblematisch.

Die Abtrennung von Gängen von der automatischen Gangauswahl, besonders am Anfang der Gangfolge, also im Bereich einer sehr hohen Übersetzung, kann zwar die Schalthäufigkeit reduzieren, setzt aber noch relativ hohe Anforderungen an den Fahrer, und die automatische Anpassung ist eingeschränkt.

Schließlich ist es nach der gattungsbildenden GB-A-2 042 658 bekannt, aus den Drehzahlen der Getriebeabtriebswelle über eine elektronische Einheit die Beschleunigung des Fahrzeuges zu ermitteln und diese zur Bestimmung der Schaltpunkte neben der Drehzahl und der Lastanforderung mitzuverwenden.

Auch die Anpassung über ausgewählte Schaltmodi befriedigt nicht voll, weil die Gangfolge über den gesamten Übersetzungsbereich doch relativ starr ist und die Reduzierung der automatisch schaltbaren Gänge zu einer Verschlechterung der Anpassung führt, die den erzielten Gewinn von weniger Schaltungen nicht rechtfertigt.

Es ist deshalb Aufgabe der Erfindung, eine Steuereinrichtung nach dem Oberbegriff von Anspruch 1 so weiterzuentwickeln, daß trotz einer optimalen Anpassung des Antriebstranges an das verbrauchsgünstige Kennfeld des Motors mit geeigneten Schaltsprüngen der Wirkungsgrad im Fahrbetrieb sich nicht verschlechtert, kein höherer Verschleiß entsteht und die Lebensdauer der Schaltelemente sich erhöht.

Diese Aufgabe wird mit den kennzeichnenden Merkmalen des Anspruches 1 erfüllt.

Wenn ein Getriebe vielgängig ausgelegt ist und damit eine optimale Anpassung an das z. B. verbrauchsgünstige Kennfeld des Motors ermöglicht dann erhöht sich die Schalthäufigkeit oder bringt dann keine optimale Anpassung des Antriebsstranges an die unterschiedlichsten Fahrzustände, wenn zu viele Schaltungen über Schaltmodi gemäß dem Getriebe nach der nicht vorveröffentlichten Anmeldung PCT/EP 84/00302 verhindert werden. Jede unter lassene, für die Anpassung notwendige Schaltung, aber auch jede erfolgte und nicht nötige Schaltung, führen zu einer Verringerung des Wirkungsgrades des Antriebe während des Fahrbetriebes. Gerade deshalb ist die Zuordnung von Schaltbefehlen zu den Schaltpunkten, die über einen Gangsprung, aber auch um Schaltsprünge, die über mehrere Gänge sich erstrecken, von besonderem Vorteil. Besonders bei einem Getriebe mit vielen möglichen, feingestuften Gängen kann durch die geschickte Auswahl von Gängen, die sich jeweils aus der Beschleunigung und der Momentanforderung ermitteln lassen, trotz einer guten Anpassung an das verbrauchsgünstige Kennfeld des Motors eine zu hohe Schalthäufigkeit mit den damit verbundenen Nachteilen, Verschleiß, Mehrverbrauch, Geschwindigkeitsverlust vermieden werden. Bei Getrieben mit Überschneidungsschaltung, aber besonders bei solchen mit Zugkraftunterbrechung während der Schaltung, bringt jede nicht unbedingt erforderliche Schaltung erhebliche Wirkungsgradverluste.

Der erforderlich Aufwand ist gering, weil die Beschleunigung aus der Drehzahl, die ohnehin erfaßt wird, rechnerisch ermittelt werden kann. Auch die Momentanforderung ist sehr einfach, z. B. aus der Gashebelstellung, zu ermitteln. Durch die Einbeziehung der Zeit für einen bestimmten Gashebelweg kann die Momentanforderung noch weiter den dynamischen Bedingungen im Antriebstrang angepaßt werden, ohne daß dafür hohe Anforderungen nötig sind, weil z. B. die Beschleunigerpumpe entsprechende Informationen liefern könnte.

Wird in der Steuereinrichtung noch eine manuelle Schaltmöglichkeit vorgesehen, so kann der Fahrer dann die automatischen Schaltungen stillegen, wenn er vorausschauend erkennt, daß mit dem gerade eingelegten Gang das vor ihm befindliche Hindernis, z. B. eine Bergkuppe, noch überwunden werden kann, während die Automatik infolge der starken Verzögerung weiter zurückschalten würde.

Auch bei einem beabsichtigten Überholvorgang ist es denkbar, eine von der Automatik vorgesehene Hochschaltung zu verhindern, weil spätestens mit der erhöhten Momentanforderung - Vollgas - eine sofortige Rückschaltung wieder verbunden wäre. Auch mit einer solchen zusätzlichen Einrichtung können unnötige Schaltungen verhindert werden. Trotzdem notwendige Korrekturen können über jeweils um einen Gang aufwärts oder abwärts durch die Betätigung des Wählhebels in Plus oder Minus bzw. eines Wählschalters in Plus oder Minus erfolgen. Weiter ist es auch möglich, durch Umstellung auf die manuelle Betätigung den von der Automatik eingelegten Gang zu halten, wobei jederzeit wieder zurück auf Automatik geschaltet werden kann.

Weitere Einzelheiten der Erfindung werden anhand von Ausführungsbeispielen und von Zeichnungen erläutert.

Es zeigen:

Fig. 1    die Steuereinrichtung in schematischer Darstellung;

Fig. 2    einen Flußplan zur Ermittlung möglicher Schaltpunkte und Schaltbefehle;

Fig. 3    einen Flußplan in bezug auf einen Schaltpunkt.

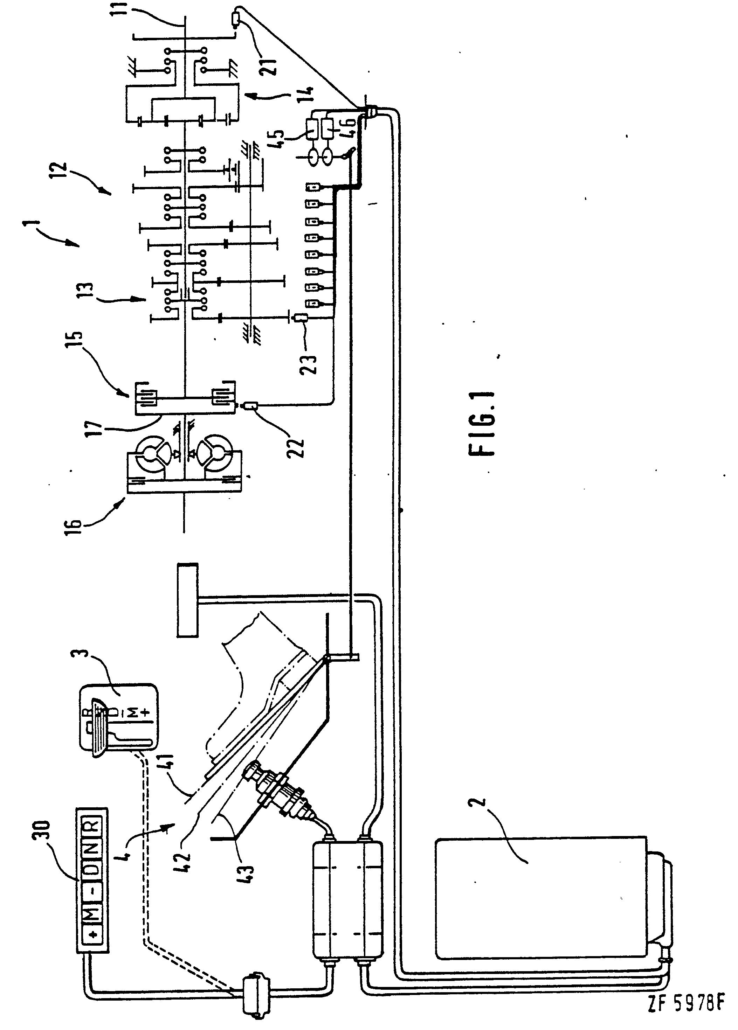

Ein in der Fig. 1 dargestelltes Stufenwechselgetriebe 1 ist ein 16gängiges Synchrongetriebe und besteht aus einem viergängigen Grundgetriebe 12, einer Splitgruppe 13 und einer Bereichsgruppe 14. Weiterhin gehört zum Getriebe eine Trennkupplung 15 und ein hydrodynamischer Drehmomentwandler 16 mit Überbrückungskupplung.

Eine elektronische Einheit 2 erhält u. a. die Signale über die Drehzahlen einer Getriebeabtriebswelle 11 - Sensor 21 - , einer Turbinenabtriebswelle 17 - Sensor 22 - und die Sekundärdrehzahl der Trennkupplung, die aus Zweckmäßigkeitsgründen am Zahnrad auf der Vorlegewelle von der ersten Konstanten - Sensor 23 - abgenommen wird.

Ein Wählschalter 3, 30 kann z. B. als Konsolenschalter 3 oder Drucktastenschalter 30 ausgebildet sein und hat die Stellung P (Parken) und/oder R (Rückwärtsfahrt) sowie N (Neutral) und D (Vorwärtsfahrt) für den automatischen Bereich. Zur Umschaltung auf einen manuellen Fahrbetrieb - Gänge werden vom Fahrer aus geschaltet - ist noch die Stellung M sowie die Stellung Plus und Minus vorgesehen, wobei bei M der von der Automatik geschaltete Gang gehalten wird. Bei jeder Verstellung von M auf Minus bzw. M auf Plus wird zurück- oder hochgeschaltet.

Eine Gashebelstellung 4 mit Leergasstellung 41, Vollgasstellung 43 und einer Mittelstellung 42 wird über Lastschalter 45, 46 in die elektronische Einheit 2 eingegeben, wobei, wenn nötig, noch eine stufenlose Eingabe der Gashebelstellung möglich ist.

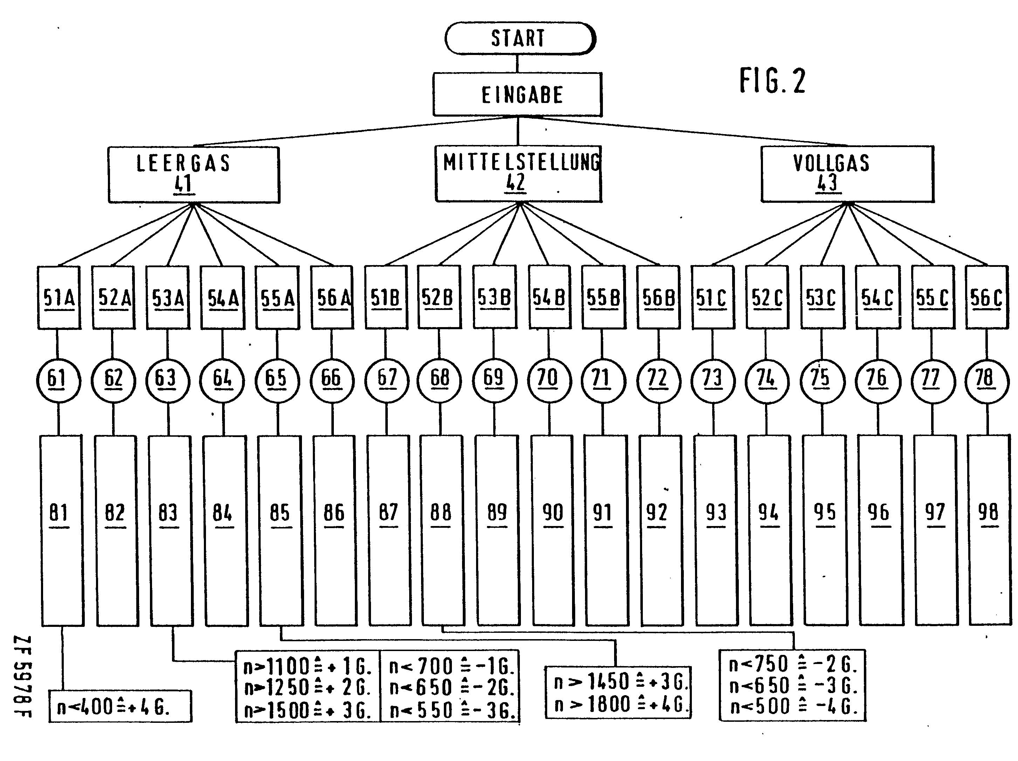

Aus dem Flußplan (Fig. 2) ist der Zusammenhang der Momentanforderung in Form der Gashebelstellung 4 - Leergasstellung 41, Mittelstellung 42, Vollgasstellung 43 - mit errechnete Beschleunigung 51A bis 56C der elektronischen Einheit 2, die aus der Getriebeabtriebsdrehzahl (Welle 11; Sensor 21) ermittelt ist, erkennbar. Dabei soll z. B.

51A, 51B, 51C starke Verzögerung,
52A, 52B, 52C geringe Verzögerung,
53A, 53B, 53C konstante Fahrt,
54A, 54B, 54C geringe Beschleunigung,
55A, 55B, 55C mittlere Beschleunigung,
56A, 56B, 56C große Beschleunigung

bedeuten. Schaltpunkte 61 bis 78 sind ausschließlich aus diesen Parametern abgeleitet und haben keine Beziehung zum wirklich eingelegten Gang und auch nicht zu dem Gangangebot des Getriebes. So ist es denkbar, daß die Anzahl der Schaltpunkte mit der Anzahl der Gänge, die das Getriebe ermöglicht, nicht übereinstimmt.

Jedem so ermittelten Schaltpunkt 61 bis 78 sind empirisch festgelegte oder auch errechnete Schaltbefehle zugeordnet. Dabei ist es möglich, daß einem Schaltpunkt, z. B. 61, auch nur ein Schaltbefehl 81 zugeordnet ist. Es ist aber auch möglich, daß einem Schaltpunkt, z. B. 65, mehrere Schaltbefehle 85 zugeordnet sind und einer davon, entsprechend eben der Drehzahl, ausgewählt wird. Alle Schaltbefehle beziehen sich nicht auf feste Gänge, sondern geben jeweils nur den von der Automatik ermittelten Schaltsprung in bezug auf den zur Zeit eingelegten Gang an, z. B. plus 3 Gänge oder minus 2 Gänge.

Bei der Zuordnung von mehreren Schaltbefehlen 85 zu einem Schaltpunkt 65 erfolgt deren Auswahl über die Motor- oder Turbinendrehzahl, die z. B. am Sensor 22 (Fig. 1) ermittelt und der elektronischen Einheit zugeführt wird.

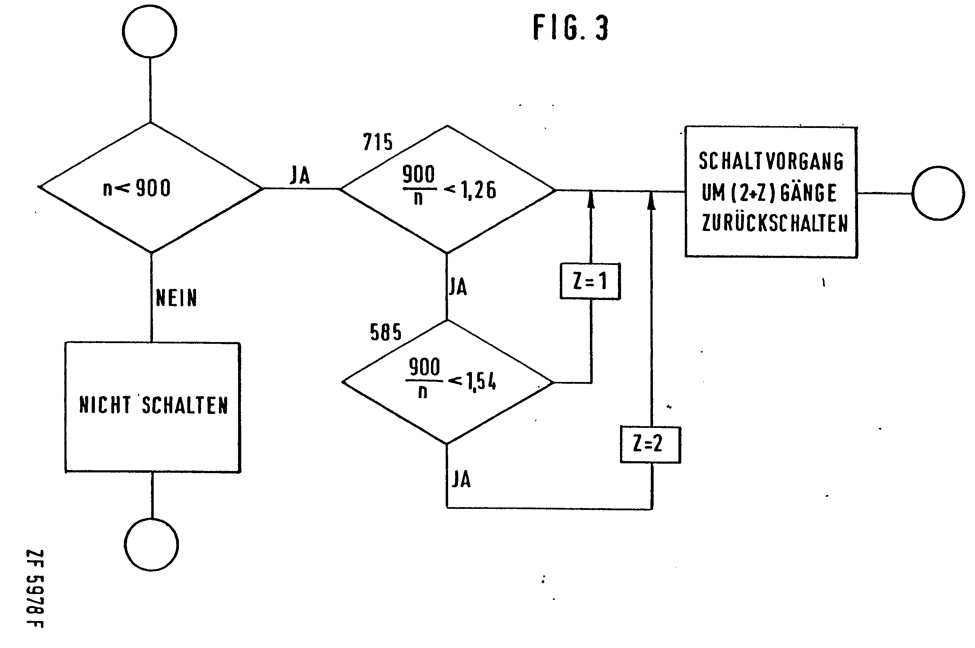

In Fig. 3 ist die Auswahl des richtigen Schaltbefehles aus den möglichen, dem jeweiligen Schaltpunkt zugeordneten Schaltbefehlen in einem Flußplan dargestellt.

Sind z. B. dem Schaltpunkt 68 (Fig. 2) drei Schaltbefehle zugeordnet, so erfolgt deren Auswahl nach der Turbinendrehzahl, wie in dieser Fig. 3 dargestellt. Damit werden noch während der Schaltung - also nach der Ermittlung des Schaltpunktes - die Bedingungen im Antriebstrang, soweit sie aus der Drehzahl ableitbar sind, berücksichtigt.

Der Gangwechsel in Vorwärtsfahrt bei einem gewollten automatischen Betrieb, nämlich dann, wenn der Wählschalter 3 oder 30 auf D steht, läuft wie folgt ab: Das Gaspedal soll in Mittelstellung 42 stehen, was über die Lastschalter 45, 46 der elektronischen Einheit übermittelt wird. Gleichfalls soll aus der über den Sensor 21 ermittelten Drehzahl der Getriebeabtriebswelle 11 eine negative Beschleunigung von der elektronischen Einheit 2 ermittelt worden sein, die einer geringen Verzögerung entspricht, so daß der Schaltpunkt 68 (Fig. 2) den Ablauf nach dem Flußplan (Fig. 3) in Gang setzt. Aus der den Schaltpunkt 68 zugeordneten Tabelle 88 der Schaltbefehle ist erkennbar, daß, je nach Drehzahl in diesem Beispiel, der Turbinendrehzahl vier Möglichkeiten offen sind (Fig. 3).

1. Liegt die Drehzahl über 900 U/min, erfolgt keine Schaltung und das Programm läuft neu an.

2. Liegt die Drehzahl darunter, erfolgt immer eine Schaltung, wobei zwei Gänge zurückgeschaltet wird, wenn die Drehzahl noch über 715 U/min liegt.

3. Drei Gänge zurückgeschaltet wird, wenn die Drehzahl noch zwischen 715 U/min und 585 U/min liegt und

4. um vier Gänge zurückgeschaltet wird, wenn die Drehzahl unter 585 U/min liegt.

Diese Werte und Schaltbefehle sind vorrangig empirisch ermittelt, können aber auch errechnet werden und entsprechen etwa dem Schaltverhalten eines guten Fahrers bei vergleichbaren Bedingungen mit dem gleichen, jedoch handschaltbaren Getriebe.

Bei konstanter Fahrt, also ohne Beschleunigung 53A, 53B, 53C bei allen drei Momentanforderungen:

- Gaspedal nicht betätigt, Leergasstellung 41,
- Gaspedal in Mittelstellung 42,
- Gaspedal voll betätigt, Vollgasstellung 43

sind den Schaltpunkten 63, 69, 75 eine relativ große Anzahl von Schaltbefehlen zum hoch- oder zurückschalten, je nach gerade erreichter Drehzahl, zugeordnet.

Nur bei einer solchen konstanten Fahrt erfolgen alle Gangschaltungen nur last- und drehzahlabhängig, wie ja bekannt, jedoch auch mit möglichen Schaltsprüngen, die in der Normalstellung eines Automatgetriebes nicht bekannt sind.

**Patentansprüche**

1. Steuereinrichtung zum selbsttätigen Schalten von vielgängigen Stufenwechselgetrieben (1) mit einer elektronischen Steuereinheit (2) zur Ermittlung der Schaltpunkte (61 bis 78) für die Gangumschaltung sowie mit einem Wählschalter (3, 30) für die Park- und/oder Neutralstellung (N) sowie die Vorwärts- (D) und Rückwärtsfahrt (R), wobei die Schaltpunkte (61 bis 78) in Abhängigkeit von der Fahrzeuggeschwindigkeit, der Momentanforderung - Gashebelstellung (4) - und der aus den Drehzahlen der Getriebeabtriebswelle (11) ermittelten Beschleunigung festgelegt werden, dadurch gekennzeichnet, daß die Hoch- und Rückschaltung im Vorwärtsfahrbereich über eine jedem Schaltpunkt (61 bis 78) zugeordnete unterschiedliche Anzahl von Gängen erfolgt.

2. Steuereinrichtung nach Anspruch 1, dadurch gekennzeichnet, daß für jeden Schaltpunkt (61 bis 78) die Anzahl der Gänge - Schaltsprünge - für eine Hochoder Rückschaltung festgelegt sind (Schaltbefehl 81).

3. Steuereinrichtung nach Anspruch 1, dadurch gekennzeichnet, daß für jeden Schaltpunkt (61 bis 78) mehrere Schaltsprünge (Schaltbefehl 88) festgelegt sind und daß deren Auswahl drehzahlabhängig, vorrangig motor- bzw. turbinendrehzahlabhängig, erfolgt (Fig. 3).

4. Steuereinrichtung nach Anspruch 1, dadurch gekennzeichnet, daß jede Schaltpunktermittlung und jede Gangumschaltung unabhängig vom gerade eingelegten Gang erfolgt.

5. Steuereinrichtung nach Anspruch 1, dadurch gekennzeichnet, daß die Beschleunigung fortlaufend aus der Drehzahl der Getriebeabtriebswelle (11) in der elektronischen Steuereinheit (2) ermittelt wird.

6. Steuereinrichtung nach Anspruch 1, dadurch gekennzeichnet, daß die Momentanforderung (Gashebelstellung 4) in Bereiche, z. B.

- Gashebel nicht betätigt,
- Gashebel in Mittelstellung,
- Gashebel voll betätigt,

aufgeteilt sind und diesen jeweils die errittelten Beschleunigungswerte zugeordnet sind (Fig. 2).

7. Steuereinrichtung nach Anspruch 1, dadurch gekennzeichnet, daß die Beschleunigung in Bereiche (51A bis 56A, 51B bis 56B, 51C bis 56C) aufgeteilt sind, die den Bereichen der Momentanforderung (41 bis 43) zugeordnet und als Schaltpunkte (61 bis 78) gespeichert sind.

8. Steuereinrichtung nach Anspruch 1, dadurch gekennzeichnet, daß die Verstellgeschwindigkeit der Momentanforderung (41 bis 43) - Weg der Gashebelverstellung in der Zeiteinheit - zur Bildung der Schaltpunkte (61 bis 78) und der Schaltbefehle (81 bis 98) in Form des Schaltsprunges (81)/der Schaltsprünge (88) verwendet wird.

9. Steuereinrichtung nach Anspruch 1, dadurch gekennzeichnet, daß über den Wählschalter (3, 30) die automatische Schaltung aufgehoben wird (Stellung M) und Auf- und Abwärtsschaltungen manuell erfolgen können.

10. Steuereinrichtung nach Anspruch 9, dadurch gekennzeichnet, daß Hoch- oder Rückschaltungen über eine weitere Verstellung (+ ; -) des Wählhebels (3, 30) möglich sind.

## Claims

1. A control device for the automatic changing of multispeed stepped change-speed gears (1) with an electronic control unit (2) for determining the change points (61 to 78) for the change-over of speed and with a selector (3, 30) for the parking and/or neutral position (N) as well as forward (D) and reverse travel (R), the change points (61 to 78) being determined as a function of the vehicle speed, the instantaneous demand - accelerator position (4) - and the acceleration determined from the speeds of the driven shaft (11) of the gear, characterized in that changing up and back in the forward travel range is effected via a different number of speeds associated with each change point (61 to 78).

2. A control device according to claim 1, characterized in that the number of speeds - change jumps - for a change up or back are determined for each change point (61 to 68) (change command 81).

3. A control device according to claim 1, characterized in that several change jumps (change command 88) are determined for each change point (61 to 78) and in that they are selected as a function of speed, mainly as a function of the engine or turbine speed (Figure 3).

4. A control device according to claim 1, characterized in that each determination of change point and each change-over of speed takes place independently of the speed just engaged.

5. A control device according to claim 1, characterized in that the acceleration is determined continuously from the speed of the driven shaft (11) of the gear in the electronic control unit (2).

6. A control device according to claim 1, characterized in that the instantaneous demand (accelerator position 4) is split up into ranges, for example,

- accelerator not actuated
- accelerator in middle position
- accelerator fully actuated

and the acceleration values determined are associated with them in each case (Figure 2).

7. A control device according to claim 1, characterized in that the acceleration is divided into ranges (51A to 56A, 56B to 56B, 56C to 56C) which are allocated to the ranges of the instantaneous demand (41 to 43) and are stored as change points (61 to 78).

8. A control device according to claim 1, characterized in that the speed of adjustment of the instantaneous demand (41 to 43) - path of accelerator adjustment per unit of time - is used for forming the change points (61 - 78) and the change commands (81 to 98) in the form of the change jump (81)/change jumps (88).

9. A control device according to claim 1, characterized in that the automatic changing is removed via the selector (3, 30) (position M) and upward and downward changes can be effected manually.

10. A control device according to claim 9, characterized in that changes up or back are possible via a further adjustment (+ ; -) of the selector (3, 30).

## Revendications

1. Dispositif de commande pour la commutation automatique de boîtes de vitesses à étagements à plusieurs rapports (1) avec un module de commande (2) électronique pour déterminer les points de passage des vitesses (61 à 78) pour le passage des vitesses et avec un contacteur de sélection (3, 30) pour la position parking et/ou la position neutre (N) ainsi que la marche avant (D) et la marche arrière (R), les points de passage des vitesses (61 à 78) étant fixés en-fonction de la vitesse du véhicule, du couple requis, de la position de l'accélérateur (4) et de l'accélération déterminée à partir de la vitesse de rotation de l'arbre de la boîte en sortie (11), caractérisé en ce que la montée des vitesses et la rétrogradation dans la plage de conduite en marche avant sont réalisées par l'intermédiaire d'un nombre variable de vitesses relié à chaque point de passage (61 à 78).

2. Dispositif de commande selon revendication 1, caractérisé en ce que le nombre des vitesses - des sauts de vitesses - est défini pour chaque point de passage (61 à 78) pour la montée des vitesses et pour la rétrogradation (ordre de commande 81).

3. Dispositif de commande selon revendication 1, caractérisé en ce que plusieurs sauts de vitesses (ordre de commande 88) sont définis pour chaque point de passage (61 à 78), et en ce que le choix des sauts de vitesses dépend du régime et en priorité du régime moteur et du régime de la turbine (fig. 3).

4. Dispositif de commande selon revendication 1, caractérisé en ce que chaque définition des points de passage et chaque changement de vitesse a lieu indépendamment de la vitesse déjà enclenchée.

5. Dispositif de commande selon revendication 1, caractérisé en ce que l'accélération est continuellement déterminée à partir du régime de l'arbre de sortie de la boîte de vitesses (11) dans le module de commande électronique (2).

6. Dispositif de commande selon revendication 1, caractérisé en ce que le couple requis (position de l'accélérateur 4) est séparé en plages, telles, p. ex.:

- Accélérateur non actionné,
- Accélérateur sur position médiane,
- Accélérateur pleinement actionné,

les accélérations définies étant reliées à chacune de ces plages (fig. 2)

7. Dispositif de commande selon revendication 1, caractérisé en ce que l'accélération est divisée en plages (51A à 56A, 51B à 56B, 51C à 56C) reliées aux couples requis (41 à 43) et mémorisées comme points de passage des vitesses (61 à 78).

8. Dispositif de commande selon revendication 1, caractérisé en ce que la vitesse d'ajustage du couple requis (41 à 43) sur l'embrayage - course du déplacement de l'accélérateur dans l'unité temporelle - est utilisée pour la formation des points de passage des vitesses (61 à 78) et des ordres de commande (81 à 98) sous la forme d'un saut de vitesse (81)/ de sauts de vitesses (88).

9. Dispositif de commande selon revendication 1, caractérisé en ce que la commande automatique est suspendue par un contacteur de sélection (3, 30) (position M) de façon à ce que le passage aux vitesses supérieures et inférieures se fasse manuellement.

10. Dispositif de commande selon revendication 9, caractérisé en ce que la montée des vitesses et les rétrogradations peuvent être réalisées sous l'effet d'un déplacement supplémentaire (+ ; -) du levier de sélection (3, 30).

FIG.1

EP 0 255 519 B1

ZF 5978F

EP 0 255 519 B1

FIG. 2

START

EINGABE

| LEERGAS 41 | MITTELSTELLUNG 42 | VOLLGAS 43 |

51A 52A 53A 54A 55A 56A 51B 52B 53B 54B 55B 56B 51C 52C 53C 54C 55C 56C

61 62 63 64 65 66 67 68 69 70 71 72 73 74 75 76 77 78

81 82 83 84 85 86 87 88 89 90 91 92 93 94 95 96 97 98

$n<400 \hat{=} +4\,G.$

| $n>1100 \hat{=} +1\,G.$ | $n<700 \hat{=} -1\,G.$ |
|---|---|
| $n>1250 \hat{=} +2\,G.$ | $n<650 \hat{=} -2\,G.$ |
| $n>1500 \hat{=} +3\,G.$ | $n<550 \hat{=} -3\,G.$ |

| $n>1450 \hat{=} +3\,G.$ |
|---|
| $n>1800 \hat{=} +4\,G.$ |

| $n<750 \hat{=} -2\,G.$ |
|---|
| $n<650 \hat{=} -3\,G.$ |
| $n<500 \hat{=} -4\,G.$ |

# FIG. 3

EP 0 255 519 B1

ZF 5978 F